Europäisches Patentamt

**European Patent Office**

Office européen des brevets

(19)

(11) Publication number: **0 153 148**
A1

(12) # EUROPEAN PATENT APPLICATION

(21) Application number: **85300967.8**

(51) Int. Cl.⁴: **A 47 J 37/04**, B 26 D 3/11

(22) Date of filing: **14.02.85**

(30) Priority: **18.02.84 GB 8404352**

(43) Date of publication of application: **28.08.85**
**Bulletin 85/35**

(84) Designated Contracting States: **CH DE FR GB IT LI NL SE**

(71) Applicant: **Ozoran Limited, Sunlight Chambers 2/4 Bigg Market, Newcastle upon Tyne NE1 1UW (GB)**

(72) Inventor: **Ozoran, Roger Mustafa, Flat 7 161 Gloucester Place, London, NW1 6DT (GB)**

(74) Representative: **Virr, Dennis Austin, Reid Sharpe Floor B Milburn House Dean Street, Newcastle upon Tyne NE1 1LE (GB)**

(54) **Apparatus for producing cooked meat slices.**

(57) Apparatus for producing cooked meat in the form of slices, for example for slicing meat for döner kebabs, comprises a rotary spit (10) to receive a cylinder of meat (30) and rotate it about its axis, a grill (32 or 80, 82) adjacent to and facing the spit (10) and extending over at least the approximate axial extent thereof so as to grill the curved surface of the meat cylinder, knife means (60) to remove slices of meat from the cylinder surface as the spit rotates and advancing means (44 or a stepping linear actuator) to achieve progressive relative approach of the spit (10) and the knife means (60) as meat is removed from the cylinder surface.

# APPARATUS FOR PRODUCING COOKED MEAT SLICES

The invention is an apparatus for producing cooked meat in the form of slices. It is of particular value and interest for producing sliced cooked meat suitable for use in döner kebabs.

In the conventional production of döner kebabs, a large cylindrical loaf of compressed meat is cooked on a vertical spit rotating in front of a grill adjacent to the serving counter and slices of meat are cut from the surface of the meat loaf as required. The satisfactory cutting of the meat from the loaf is a skilled operation and requires a disproportionate amount of the time of an experienced operative. Since the operation is usually carried out in a fast-food establishment, where it is essential that all activities be carried out competitively, it is highly desirable that the level of skill and time entailed should be reduced to a minimum.

If, however, a less skilled operative is employed, then the thickness of the sliced meat, and consequently the uniformity of the product quality, may vary excessively and a less acceptable product is obtained.

A further disadvantage of the conventional method of producing döner kebab slices is that, because the grilling and slicing are carried out as a continuous operation, it is necessary for the operative, when slicing the meat from the loaf, to stand uncomfortably close to the grill.

With the aforesaid disadvantages in mind, it is an important object of the present invention to provide an

apparatus for producing cooked meat slices which is less dependent on the skill of the operative, uses less of the operative's time and in turn reduces the operative's exposure to the heat of the grill, while making it possible to maintain the uniformity of quality of the Sliced, cooked meat.

The apparatus according to the present invention for producing cooked meat slices comprises a rotary spit adapted to receive a cylinder of meat and rotate it about its axis, a grill adjacent to and facing said spit and extending over at least the approximate axial extent thereof so as to grill the curved surface of such meat cylinder, knife means mounted to remove slices of meat from the cylinder surface as the spit rotates, and advancing means to achieve progressive relative approach of the spit and the knife means as meat is removed from the cylinder surface.

The rotary spit itself may be of conventional design. In the case of döner kebab production, the spit is normally vertical, the drive to rotate the spit being located at the lower end thereof and the whole spit and meat loaf assembly being demountable when a fresh supply of meat is required. The rotational speed of the spit is preferably variable, to take account of different rates of cooking of the meat and also of different rates of removal of meat slices according to demand.

The grill may be heated by any desired method but in particular by gas or electricity. A control for the rate of heat output of the grill is preferably provided. The grill may comprise a flat or curved array of heating elements and may be one or more grill units, for example two such flat or curved arrays set at an angle to each other. To ensure complete cooking of the meat loaf, the grill should extend, in the axial direction of the spit, at least sufficiently far to irradiate the full length of the meat loaf.

The knife means which is an essential feature of the present invention may be a flat, preferably elongated blade and may function with its cutting edge parallel to the axis of the spit (that is vertically when the spit is vertical) but preferably the cutting edge extends generally tangentially with respect to said axis and to the curved surface of the cylindrical meat loaf. In this latter orientation, the knife means removes a meat slice in a direction parallel to the axis. Preferably the knife means is vibrated or otherwise reciprocated parallel to its cutting edge so as to assist cutting.

Progression of the knife means over the surface of the meat loaf as it cuts a slice may be achieved by mounting the knife means on a screw-threaded shaft and rotating the latter. In the case of a knife means which progresses in a direction parallel to the axis of the loaf, the cutting blade may, if desired, be double-edged so as to cut also on a return stroke. Alternatively, the blade may cut in one direction of movement only and then return to its starting position, from

- 4 -    0153148

where it may begin a new cutting stroke, if desired after a pause related to the rate of rotation of the spit. In either case, the return of the blade may be achieved either by reversing the blade drive means, e.g. an electric motor, or by providing a reversing transmission between the drive means and the blade.

In the alternative, less preferred, orientation of the knife means, in which the cutting edge is parallel to the axis of the loaf, it is not necessary to move the knife means to cut a slice as the relative movement is provided by rotation of the meat loaf.

In the apparatus according to the present invention advancing means are provided to achieve progressive relative approach of the spit and the knife means as meat is removed from the cylindrical surface of the meat loaf. This progressive approach may be achieved by movement of either the spit or the knife means or of both. Preferably it is the knife means which moves towards the spit. The advancing means may, at its simplest, be manually operated means such that the operative adjusts the position of the knife means as necessary. However, it is much preferred that the advancing means be automatic.

Such an automatic advancing means may respond to a mechanical or electrical signal, for example from a feeler, which indicates the actual or relative diameter of the meat loaf at any given moment. Alternatively, the advancing means may be controlled by signals derived from factors which determine the rate of removal of meat from the loaf, for example the rate of rotation of the spit and/or the rate of progress of the knife means over the meat surface (the cutting rate). In other words, the rate of automatic relative approach of the knife means and the spit may be related to the observed rate of removal of meat or to the calculated rate of removal of meat on a "dead reckoning" basis.

The knife means may move towards the axis of the spit along a linear path or, alternatively and preferably, along an arcuate path.

As a further optional feature of the present invention, the grill may also be moved closer to the axis of the spit as the meat is removed. The movement of the grill may be linked directly, either mechanically or electrically, to the advancing of the knife means or may be operated independently thereof.

The invention will now be further described, by way of example, with reference to the accompanying drawings, in which:-

Fig. 1 is a diagrammatic part-sectional front view illustrating a first embodiment of the apparatus of the present invention;

Fig. 2 is a diagrammatic part-sectional plan view of the apparatus of Fig. 1;

Fig.3 is a view corresponding to Fig. 2 but illustrating a second embodiment of the apparatus

- 6 -

0153148

of the present invention;

Fig. 4 is a diagrammatic part-sectional front view of a preferred third embodiment of the apparatus of the present invention; and

Fig. 5 is a diagrammatic plan view of the apparatus of Fig. 4.

Throughout the various figures of the drawings, similar reference numerals have been used to indicate similar parts.

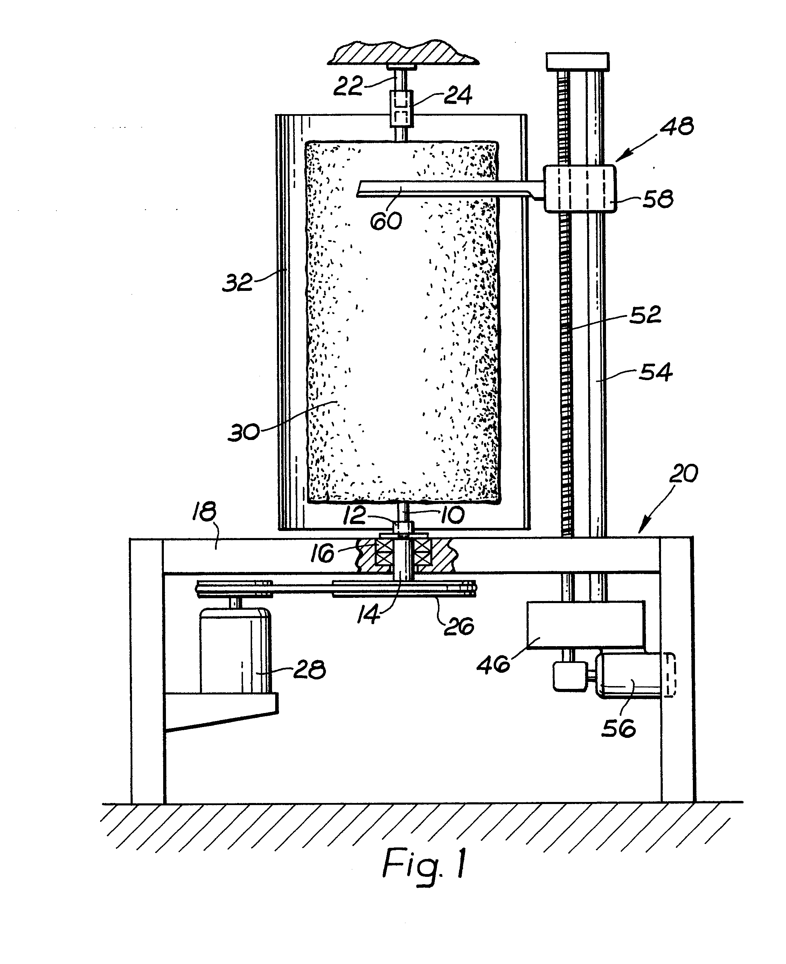

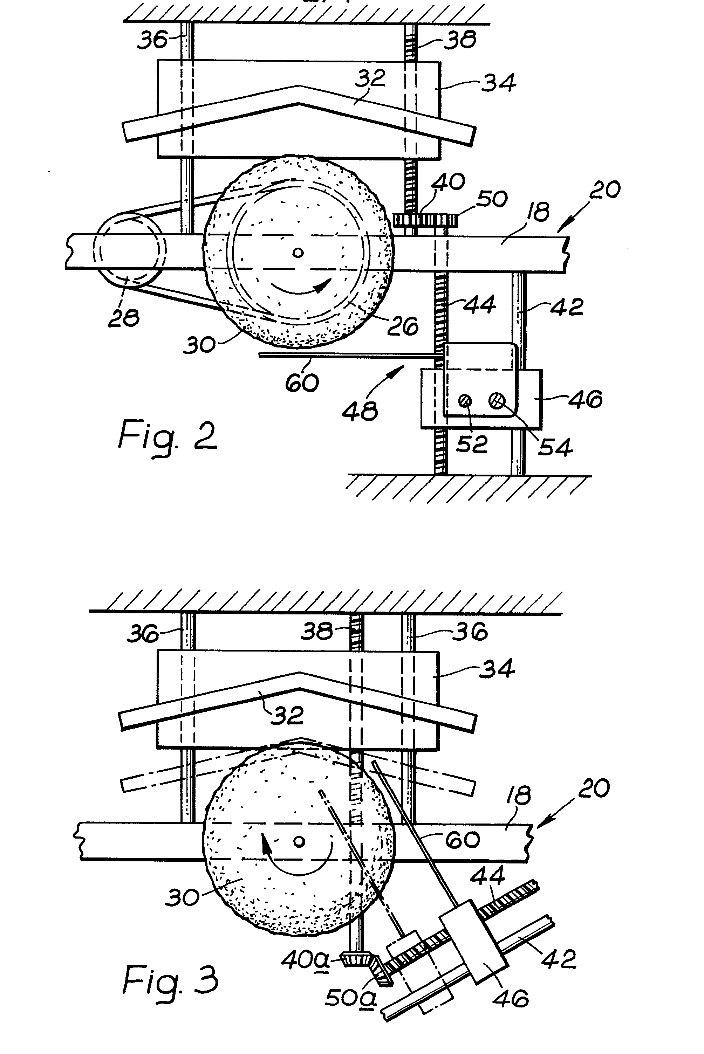

Referring firstly to Figs. 1 and 2, the illustrated embodiment comprises a substantially vertical rod or spit 10 connected by a quick-action coupling 12 to a stub 14 jounalled near its bottom end by a bearing 16 in a horizontal member 18 of a supporting frame indicated generally by the numeral 20. At its upper end the rod or spit 10 is located relative to a trunnion 22 aligned with the stub 14, by means of a manually-shiftable sleeve 24. However this additional support for the spit, in the form of trunnion 22 and sleeve 24, may be omitted if desired.

The stub 14 carries a pulley 26 enabling it to be driven, for instance at a rate of 0.1 to 0.5 revolutions per minute, from an electric motor 28 mounted on the frame 20.

As seen in Figs. 1 and 2, the function of the rod or spit 10 is to support a meat cylinder 30, for example formed by compression of minced and/or otherwise processed meat, the axial height of the cylinder being, for example, in the range of 600 to 800 mms. and the diameter thereof being, for instance in the range of 400 to 700 mms.

A cooking grill indicated diagrammatically at 32 is arranged behind the rod or spit 10 so as to be approximately arcuately disposed behind the meat cylinder 30, over the entire height thereof, and, as is illustrated in Fig. 2, the grill 32 is carried by a crosspiece 34 (omitted from Fig. 1 for simplification of illustration) guided for movement towards and away from the meat cylinder 30 by a smooth guide rod 36 and a parallel threaded guide rod 38 both of which are supported by the frame 20. The threaded guide rod 38 is rotatable, is provided with a gearwheel 40 on its end adjacent to the horizontal frame member 18 and engages with the cross piece 34 so that upon rotation of the rod 38 the crosspiece 34 approaches towards or recedes from the cylinder 30. The rod 38 accordingly serves as a traverse screw and is adapted to be rotated, at a rate correlated to the rate of rotation of the cylinder 30 and the thicknesses of the slices desired to be cut, by a respective motor (not shown) embodied in the crosspiece 34.

At the side of the cylinder 30 remote from the grill 32 is a further pair of guide rods 42, 44 of which the guide rod 44 is threaded and serves as a traverse screw for a respective cross-piece 46 for a knife arrangement indicated generally by the numeral 48. A gearwheel 50 on the threaded rod 44 meshes with the gearwheel 40 so the two traverse screws 38 and 44 rotate in unison and progress their respective crosspieces 34 and 46 simultaneously either towards or away from the cylinder 30 at equal speeds.

Carried by the crosspiece 46 are parallel feed guide rods 52 and 54 of which the rod 52 is a feed screw driven by a feed motor 56 supported below the crosspiece 46. The rods 52, 54 serve to guide a knife-carrying housing 58 with which the feed screw 52 threadedly engages and which supports a horizontal cutting blade 60. Incorporated in the housing 58 is a vibrator by means of which the blade 60 is vibrated.

A receiver (not shown) in the form of a heated receptacle is provided beneath the frame 20 in a position to receive meat slices severed from the cylinder 30 by means of the blade 60.

The manner of operation of this first form of apparatus will readily be understood from the foregoing description. With the motor in the crosspiece 34 and the motors 28 and 56 running, and with the grill 32 operative, the cylinder 30 rotates slowly and its surface facing the grill 32 is cooked to a depth of about 2 mm. upon one pass before the grill. Simultaneously, the knife blade 60 cuts a continuous strip-form slice from the cylinder 50, this being for instance of 1 to 2 mm. in thickness. The knife carrier 58 is, of course, caused (by the operation of the motor 56) to be fed up and down the cylinder 30 at a relatively rapid rate so that the slices it cuts are of relatively wide strip-like configuration. The vibration of the blade 60 serves to ensure effective severing by the knife blade 60. As previously mentioned, the cut slices fall into the receptacle below the knife, for subsequent collection.

As the knife cuts the meat slices, and the effective diameter of the cylinder decreases, the two traverse screws 38 and 44 rotate to approach the knife blade 60 and the grill 32 towards the surface of the cylinder 30, thereby to maintain a constant spacing of the grill 32 from the cylinder 30 and a constant slicing thickness.

The embodiment of Fig. 3 is in general similar to that described above and operates in the same manner. It differs from the preceding embodiment, however, in that the crosspiece 34 is slidable along two smooth guide rods 36 and the traverse screw 38 extends through the frame member 18 to terminate at a bevel gear 40a. This enables the traverse screw 44, provided with a bevel gear 50a, and its associated guide rod 42 to be disposed at an angle to the guide rods 36.

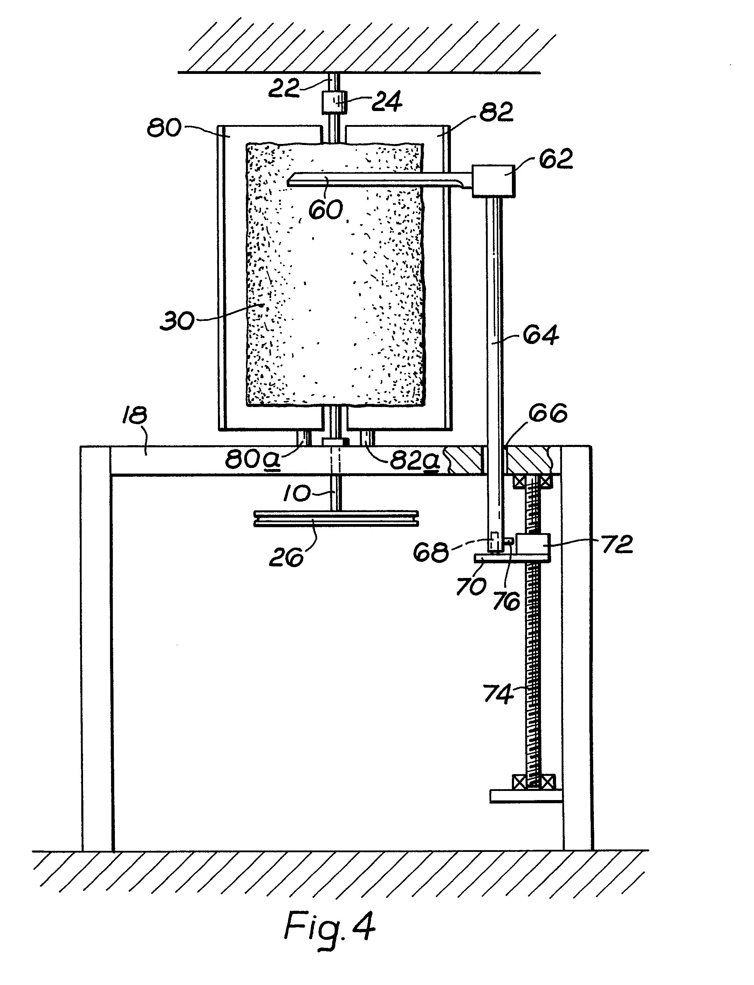

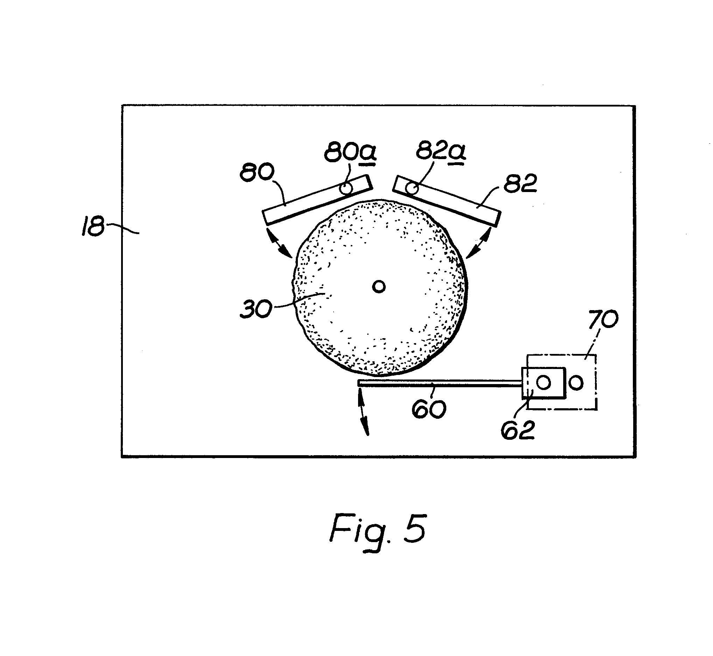

The embodiment illustrated in Figs. 4 and 5 of the drawings represents a preferred form of the present invention. In that embodiment, the cylindrical meat loaf 30 is similarly supported by a spit 10, mounted and driven in the same way as in the apparatus of Figs. 1 to 3. However the arrangements for progressing the knife over the loaf surface and for advancing the knife and the grill towards the spit are all different from those of the other embodiments.

The knife blade 60 is supported by a knife-carrying housing 62, which incorporates means for vibrating the blade 60 and which in turn is carried at the upper end of a hollow rod 64. The rod 64 extends through a bore 66 in the member 18 and is supported below that member upon a vertical stub 68 on the mounting 70 of a reversing motor 72. The motor 72 runs vertically upon a threaded rotary shaft 74 and, in traversing the length of the shaft 74 in a vertically downward direction, cuts a continuous or discontinuous slice of meat from the cylinder 30. When the motor 72 reaches the bottom of the shaft 74, it reverses its linear direction of movement and climbs to the top of the shaft to begin the next cutting stroke of the knife blade 60.

Because the rod 64 is freely rotatable about the stub 68, the knife vlade 60 is free to swing towards the axis of the cylinder 30. This swinging movement is effect by the operation of a stepping linear actuator (not shown) upon a rod 76, extending radially from the lower end of the hollow rod 64 and to which the actuator shaft is directly coupled.

The grill is in two sections 80 and 82, pivoted at 80a and 82a respectively. Pivotal movement of the grill sections towards the meat cylinder 30 is effected by means of a drive chain working in opposite directions around chain wheels below the respective pivot points, against the pressure of a chain-return spring. Alternatively, drive means other than a chain drive may be used to secure pivoting of the grill sections.

The various drive motors for giving the linear vertical motion of the knife blade 60 and for advancing the knife blade 60 and grill sections 80, 82 towards the meat cylinder are individually controlled by a microprocessor, which in turn determines the aforesaid operations in response to input information regarding,in particular, the rate of rotation of the spit and the rate of removal of meat from the cylinder 30.

CLAIMS

1. Apparatus for producing cooked meat slices, comprising a rotary spit adapted to receive a cylinder of meat and rotate it about its axis, a grill adjacent to and facing said spit and extending over at least the approximate axial extent thereof so as to grill the curved surface of such meat cylinder, knife means mounted to remove slices of meat from the cylinder surface as the spit rotates, and advancing means to achieve progressive relative approach of the spit and the knife means as meat is removed from the cylinder surface.

2. Apparatus as claimed in claim 1, having variable drive means to rotate the spit at different speeds.

3. Apparatus as claimed in claim 1 or claim 2, wherein the spit is mounted with its axis generally vertical and the knife means has a cutting edge extending parallel to the axis of the spit.

4. Apparatus as claimed in claim 1 or claim 2, wherein the spit is mounted with its axis generally vertical and the knife means has a cutting edge extending generally tangentially with respect to said axis.

5. Apparatus as claimed in claim 4, wherein the knife means is vibratable parallel to its cutting edge.

6. Apparatus as claimed in claim 4 or claim 5, having knife progressing means to move the knife means in a direction parallel to the axis of the spit.

7. Apparatus as claimed in claim 6, wherein the movement of the knife means parallel to the axis of the spit is reversible.

8. Apparatus as claimed in claim 6 or claim 7, wherein the knife progressing means is a rotary screw-threaded shaft.

9. Apparatus as claimed in any of the preceding claims, wherein the progressive relative approach of the spit and the knife means is attained by movement of the knife means.

10. Apparatus as claimed in claim 9, having also grill advancing means to move the grill progressively close to the spit as meat is removed from the cylinder surface.

11. Apparatus as claimed in any of the preceding claims wherein the extent of relative approach of the spit and the knife means is determined by monitoring the diameter of the meat cylinder.

12. Apparatus as claimed in any of claims 1 to 10, having a microprocessor to calculate the extent of removal of meat from the meat cylinder and thereby to instruct the knife means and/or the spit to relatively approach each other.

0153148

1/4

Fig. 1

2/4

0153148

Fig. 2

Fig. 3

0153148

Fig.4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 300 443 (MORCOS)<br><br>* The whole document * | 1-3,6-12 | A 47 J 37/04<br>B 26 D 3/11 |
| X | US-A-3 153 436 (CHESLEY)<br><br>* The whole document * | 1,4,6,7,8,9 | |
| X | US-A-3 951 054 (FRENTZEL)<br><br>* The whole document * | 1,4,6-9 | |

TECHNICAL FIELDS SEARCHED (Int. Cl.4)

A 47 J
B 26 D

The present search report has been drawn up for all claims

| Place of search | Date of completion of the search | Examiner |
|---|---|---|
| THE HAGUE | 13-05-1985 | SCHARTZ J. |